# EUROPEAN PATENT SPECIFICATION

(11) **EP 3 079 071 B1**
(45) Date of publication and mention of the grant of the patent: **01.08.2018**
(21) Application number: 15163077.9
(22) Date of filing: 10.04.2015
(51) Int. Cl.: G06F 15/173, H05K 7/20

(54) **A PANEL WITH ELECTRONIC CIRCUITS AND A SET OF PANELS**
PANEEL MIT ELEKTRONISCHEN SCHALTUNGEN UND EINEM SATZ AN PANEELEN
PANNEAU AVEC DES CIRCUITS ÉLECTRONIQUES ET ENSEMBLE DE PANNEAUX

(43) Date of publication of application: 12.10.2016
(73) Proprietor: Politechnika Lodzka, 90-924 Lodz (PL)
(72) Inventor: Jung, Jaroslaw, 94-054 Lodz (PL); Polanowski, Piotr, 93-378 Lodz (PL); Kielbik, Rafal, 95-070 Aleksandrow Lodzki (PL); Halagan, Krzysztof, 90-425 Lodz (PL); Zatorski, Witold, 93-249 Lodz (PL); Ulanski, Jacek, 95-006 Brojce (PL); Napieralski, Andrzej, 95-070 Aleksandrow Lodzki (PL); PAKULA, Tadeusz, deceased (PL)
(74) Representative: Kancelaria Eupatent.pl Sp. z.o.o

(56) References cited:
- US-A- 6 167 502
- US-A1- 2008 251 240

## Description

### TECHNICAL FIELD

The present invention relates to a panel with electronic circuits and a set of such panels, designed for use in complex computing or simulation systems.

### BACKGROUND

Complex computing systems may need a significant number of electronic circuits to operate. Supercomputers, for example, may require million of microprocessors to simulate complex physical processes. The computing elements may have to operate in parallel to simultaneously execute complex logical operations. Typically, the operational electronic circuits are arranged as a cubic lattice having cyclic boundary conditions to achieve an effect of pseudo-infinite, three-dimensional lattice.

One significant problem in design of such systems is the physical positioning of electronic circuits in space. In order to achieve satisfactory performance, the following factors should be taken into account: small number and short length of inter-circuit connections, efficient heat dissipation, system scalability enabling to add new circuits and system redundancy enabling to shut off some circuits without interrupting operation and positioning of the other circuits.

One of the known network topologies for connecting processing nodes in a parallel computer system is a torus interconnect. It can be visualized as a mesh interconnect with nodes arranged in a rectilinear array of N = 2, 3, or more dimensions, with processors connected to their nearest neighbors, and corresponding processors on opposite edges of the array connected. The lattice has the topology of an N dimensional torus and each node has 2N connections.

A US patent no. US5715391 discloses a parallel processing computer having a three dimensional (3D) torus topology. The computer includes multiple nodes formed in rows, multiple leap frog connections, and multiple end connections. The rows extend into the X, Y, and Z dimensions. The electronic circuits are mounted on horizontal boards, one over another, in cabinets. Such design requires complex cooling systems.

There is a need to provide an alternative configuration electronic circuits for scalable three-dimensional lattices.

### SUMMARY

The invention is related to a panel comprising electronic circuits connected with each other by connectors. The connected electronic circuits form a topology comprising two pseudo-infinite two-dimensional square lattices each comprising M*N circuits. The electronic circuits are arranged on the panel as a matrix of groups of circuits, the matrix having the number of rows q=N/2 and the number of columns p=M/2, wherein each group comprises 4 circuits of the first lattice and 4 circuits of the second lattice.

The panel may comprise a set of printed-circuit boards connected with wires, wherein each printed-circuit board comprises at least one group of circuits connected with paths on the printed-circuit board.

The invention is also related to a set of panels comprising at least two panels as described above, wherein the panels are connected serially such that the electronic circuits of one panel are connected to the electronic circuits of its neighboring panel having the same position in the topology of the pseudo-infinite two-dimensional square lattice.

The printed-circuit boards of individual panels may have their main planes positioned in a single vertical plane, which is the main plane of the panel.

The panels may be positioned serially one behind another.

### BRIEF DESCRIPTION OF DRAWINGS

These and other objects of the invention presented herein, are accomplished by providing a panel comprising electronic circuits and a set of such panels. Further details and features of the present invention, its nature and connections. The rows extend into the X, Y, and Z dimensions. The electronic circuits are mounted on horizontal boards, one over another, in cabinets. Such design requires complex cooling systems.

A US patent US6167502 discloses a manifold array topology that includes processing elements, nodes, memories or the like arranged in clusters. Circuits in each cluster have topology indices that result from a diagonal assignment. The clusters are connected by cluster switch arrangements.

A US patent application US2008251240 discloses a system for cooling heat-generating objects that includes an enclosure in which the heat generating objects are situated in a vertical arrangement.

There is a need to provide an alternative configuration electronic circuits for scalable three-dimensional lattices.

### SUMMARY

The invention is related to a panel and a set of panels according to the appended claims.

### BRIEF DESCRIPTION OF DRAWINGS

These and other objects of the invention presented herein, are accomplished by providing a panel comprising electronic circuits and a set of such panels. Further details and features of the present invention, its nature and various advantages will become more apparent from the following detailed description of the preferred embodiments shown in a drawing, in which:
Fig. 1 presents a diagram of a pseudo-infinite, cubic lattice;
Fig. 2A presents an example of a two-dimensional, pseudo-infinite square lattice and Fig. 2B presents its transformation into a basic panel;
Fig. 3 presents a diagram of transformation of a two-dimensional lattice;
Fig. 4A presents an example of a pseudo-infinite, three-dimensional lattice and Fig. 4B, 4C presents its transformation;
Fig. 5 presents an exemplary embodiment of a joined panel; and
Fig. 6 presents an exemplary embodiment of a set of joined panels.

### DETAILED DESCRIPTION

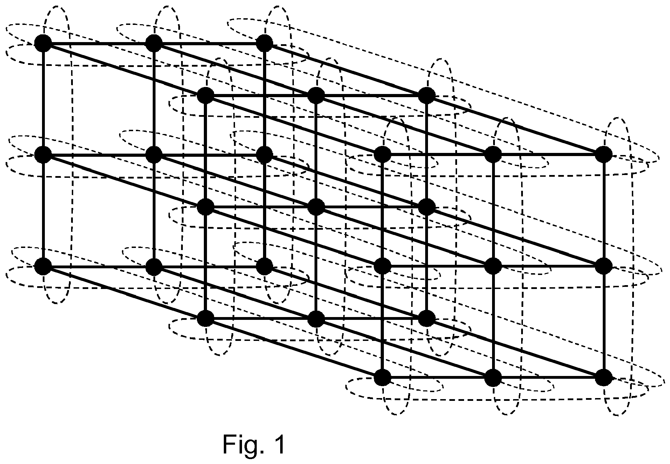

Fig. 1 presents a section of a pseudo-infinite cubic lattice having electronic circuits located at the nodes of the lattice. The present invention is particularly useful for implementation of such cubic lattice. Each electronic circuit communicates with six neighboring electronic circuits. The nodes of the lattice determine planes perpendicular to each other. The boundary electronic circuits are connected with each other (by broken lines) in order to provide cyclic boundary conditions. Such a topology is known as a pseudo-infinite cubic lattice (also called a three-dimensional torus interconnect).

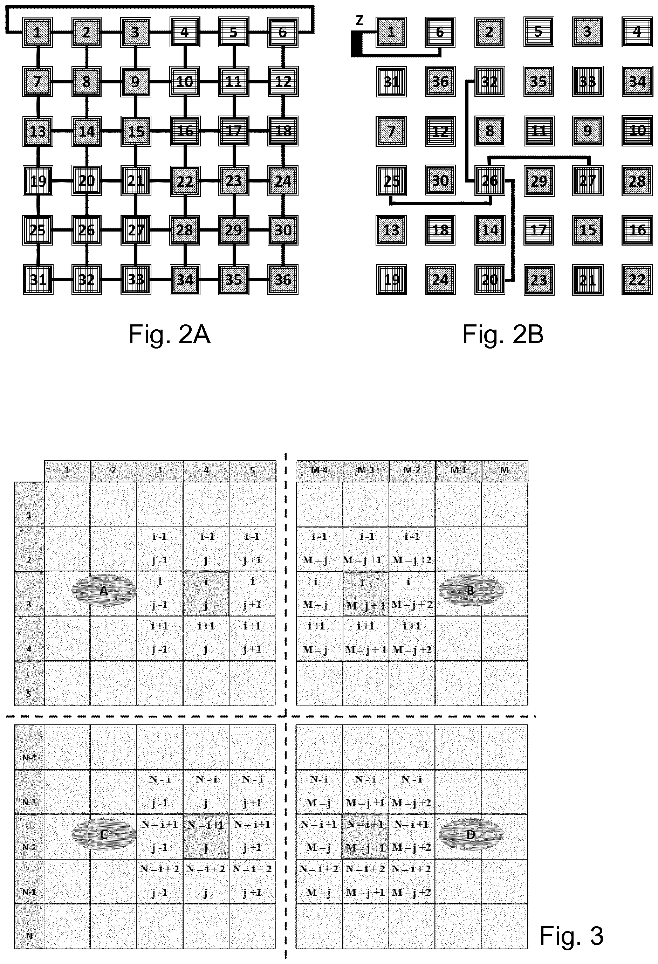

Fig. 2A presents an example of a two-dimensional pseudo-infinite square lattice, forming one of the planes of the three-dimensional lattice shown in Fig. 1, and Fig. 2B presents its transformation according to the invention.

This example will be described for a two-dimensional lattice having dimensions of 6x6 nodes, comprising 36 electronic circuits. The example may be respectively modified for other dimensions. In order to implement cyclic boundary conditions in two dimensions (to connect the bottom boundary of a plane with the top boundary as well as the left boundary with the right boundary), the electronic circuits positioned at the boundaries must be connected with signal lines, the length of which is proportional to the linear dimensions of the plane on which they are positioned.

For the sake of simplicity of the drawing, only the boundary connection between circuits 1-6 has been shown, but the circuits 7-12, ..., 31-36, 1-31, 2-32, ..., 6-36 are connected in an equivalent manner as well. The speed of information transmission between the nodes will, in such lattice, depend mostly on the length of interconnections between the circuits at the boundaries and it will decrease with the increase of lattice size.

The arrangement of electronic circuits shown in Fig. 2A may be transformed, according to a general scheme shown in Fig. 3, into an arrangement shown in Fig. 2B. The circuits that belong to the same area of the plane are denoted with the same background hatching (Fig. 2A). After the transformation, these circuits are present in every other node of the lattice. Each circuit is connected with its neighbors according to the scheme shown as an example for circuit 26. The cyclic boundary conditions are closed with connectors Z present at the lattice boundaries. For example, the Z connector allows to close the cyclic boundary conditions between circuits 1 and 6 (the boundary conditions are closed similarly for the other circuits 2, 3, 4, 5, 7, 12, 13, 18, 19, 24, 25, 30, 31, 32, 33, 34, 35, 36 present at all four boundaries of the lattice).

A significant advantage of the interconnection system shown in Fig. 2B in relation to the system shown in Fig. 2A, is that regardless of the number of electronic circuits in the lattice, the length of interconnections between the neighboring circuits, and thus the signal transmission speed, is not affected. Opening of the connector Z allows to connect the structure directly into other, possibly larger, pseudo-infinite two-dimensional structures, thereby allowing to design a scalable, two-dimensional machine.

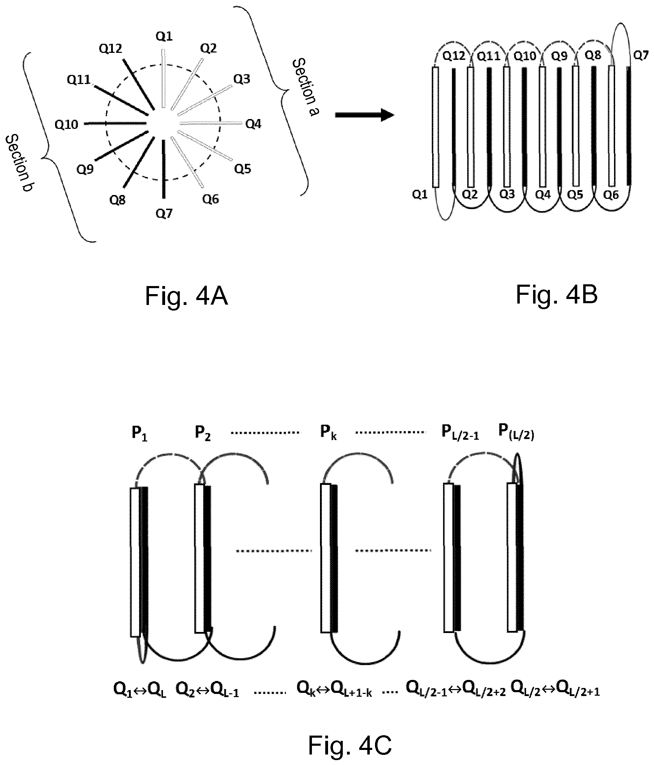

A system of electronic circuits, positioned and interconnected as shown in Fig. 2B, may be implemented as a single, two-dimensional basic panel having electronic circuits positioned on one or more printed-circuit boards (PCB). Such basic panels (Q) may form elementary modules of a three-dimensional lattice shown in Fig. 4A-4C.

Fig. 3 presents a general diagram of transformation of the pseudo-infinite, two-dimensional lattice as shown in the example of Figs. 2A-2B. The transformation is performed as follows. Assume that the circuits are positioned on a plane, in squares corresponding to lattice nodes, of *N* rows and *M* columns, enumerated with indexes *i, j.* The plane is "bent" in half two times along the broken lines. The circuits denoted with indexes *i,j*; *i,*M-*j*+1; N-*i*+1, M-*j*+1 and N-*i*+1,*j* after "bending" will be positioned near each other in a single plane, forming a structure *S1* having *N*/2 rows and *M*/2 columns. Their numbering in the *S1* structure is as follows *ₛU_{i,j}* (*₁U_{i,j}, ₂U_{i,j}, ₃U_{i,j}* and *₄U_{i,j}*). Due to such transformation, the separate circuits present in a node of a new structure *S1* communicate only with the nearest neighboring circuits enumerated with the same s indexes, positioned in four, locations of the *S1* neighboring structures. Closing of the cyclic boundary conditions requires connection of appropriate circuits positioned at a single point at the boundaries of the structure *S1.*

Fig. 4A presents an example of a pseudo-infinite, three-dimensional lattice and Figs. 4B, 4C present its transformation according to the invention.

The cyclic boundary conditions in the third dimension may be effected by positioning *L* basic panels *Q,* such as shown in Fig. 2B, on a circumference of a circle, which has been shown in fig. 4A. This solution allows for connection of all corresponding elements of the lattice with lines of the same length, however a machine with such positioned panels may not be extended in the future by further panels (the system is not scalable).

In order to design a scalable machine, the structure shown in Fig. 4A, comprising 12 vertically positioned panels Q₁-Q₁₂, has been split into two sections: *a* and *b* and subsequently the sections *a* and *b* have been disconnected and moved with respect to each other and alternately shuffled, thereby resulting at an arrangement shown in Fig. 4B. In the next stage, the neighboring basic panels Q₁-Q₁₂ of the sections *a* and *b* have been moved towards each other and connected, thereby forming a structure S2 comprising *L*/2 joined panels P₁-P₆, in which corresponding circuits *ₛU_{i,j,k}* belonging to section a and circuits *ₛU*_{*i,j,L*+*1-k*} belonging to section *b,* are positioned in substantially the same location in space, which has been shown in Fig. 4C.Owing to such a transformation, separate circuits, present at the nodes of the structure *S2,* communicate only with the nearest circuits, enumerated with the same indexes s, located on the neighboring joined panels and neighboring boards or (in order to implement cyclic boundary conditions) with directly neighboring circuits, located on the same plane.

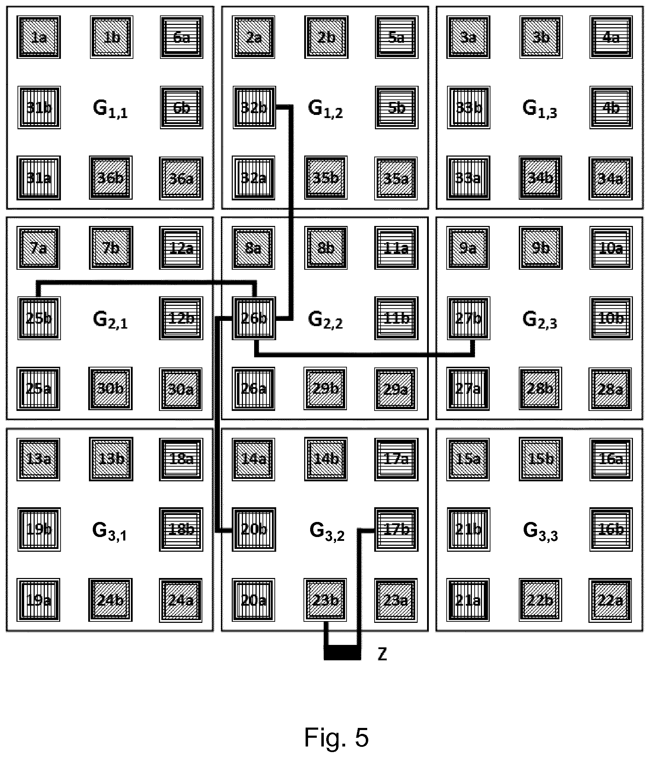

Fig. 5 presents an exemplary embodiment of a joined panel. According to the transformation procedure described with reference to Figs. 4A-4C, the separate circuits belonging to structure S2 are positioned on the joined panels comprising 72 circuits on a single panel. The circuits have been grouped into groups G_{1,1}-G_{3,3}, wherein each group may be installed on a separate printed-circuit board. A single group G_{i,j} (where i=1...3 and j=1...3) defines an elementary module allowing for interconnection of two-dimensional structures of lattice arrangements into three-dimensional, pseudo-infinite structures. Each group comprises 8 circuits, from which each belongs to a particular area of neighboring circuits in the plane of the basic topology (see Fig. 2A). The circuits denoted by symbol *a* belong to section *a,* while these denoted with symbol *b* belong to section *b* (see Fig. 4A). Each circuit belonging to a single section is connected to its neighbors according to the scheme shown for circuit 26b (the connections correspond to connection from Fig. 2B). The cyclic boundary conditions in the two spatial dimensions are implemented by means of connectors Z. For example, the connector Z allows for closing cyclic boundary conditions between circuits 17b and 23b (the boundary conditions are closed in an equivalent manner for the remaining circuits belonging to sections *a* and *b* present at the four boundaries of the panel).

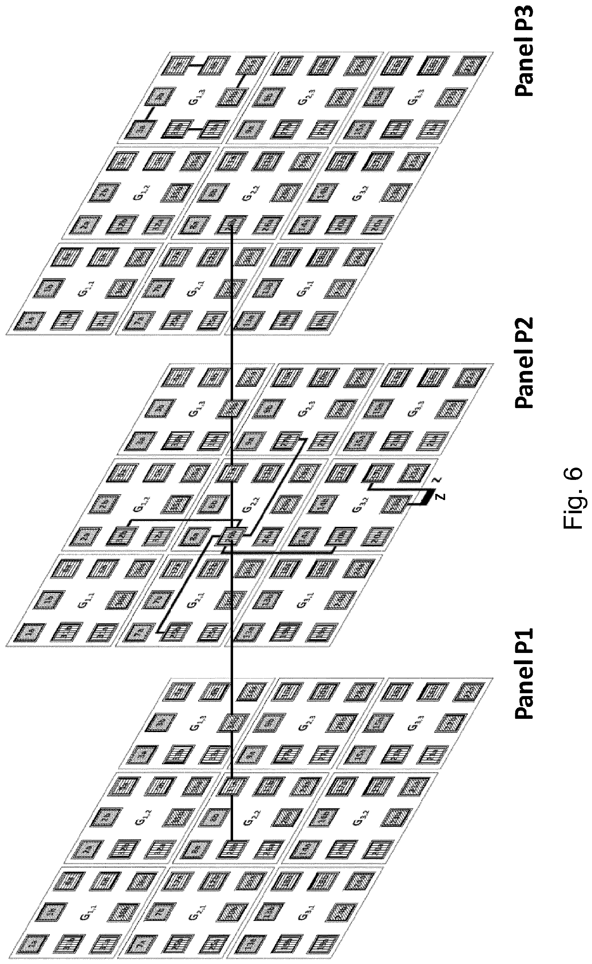

Interconnection of circuits in three dimensions as well as closing of boundary conditions in the third dimension, is shown schematically in Fig. 6. The circuits denoted with the same numbers on respective panels are joined with each other in a straight line (see: connection of circuits 26b on panels 1, 2 and 3). Implementation of cyclic boundary conditions in the third dimension is effected by connecting the circuits which have the same number, belonging to sections *a* and *b* present on terminal panels (panel 1 and panel 3). Exemplary connections implementing cyclic boundary conditions have been marked in Fig. 6 (circuits 3a and 3b, 4a and 4b, 34a and 34b as well as 33a and 33b present in panel P3 in group G_{1,3}).

The configuration shown in Fig. 6 allows for building pseudo-infinite systems for executing simultaneous logical operations (parallel machines) using the joined panels,. Such design also allows to manufacture multi-cell circuits (cellular automata), where only local interactions are present (influences between nearest neighbors), in which analysis and data processing speed does not depend on the size of the analyzing system.

As a result of transformations of Figs. 2A-2B and Figs. 4A-4C, real, unscalable cubic lattice comprising NxMxL nodes, in which there are positioned electronic circuits, has been transformed into a scalable structure S2, which is also a cubic lattice having N/2xM/2xL/2 nodes. In the nodes of the S2 structure there are boards comprising 8 circuits. Exemplary distribution of these circuits on the board is shown in Fig. 5 (separate groups G_{1,1}, G_{1,2}....). A method for joining the circuits into groups and closing of the boundary conditions has been shown in Fig. 6.

The developed spatial structure of alignment of circuits on planes and a network of interconnections, allows for transferring signals between circuits in machines designed to perform simultaneous (parallel) logic operations (including mathematical calculations) by means of electronic circuits (e.g. programmable FPGA circuits, microprocessors, ASIC dedicated circuits or other) located in the lattice that reflects the actual real structure of spatial objects. These objects can be arbitrary, complex, multi-element, physical objects (e.g. mixtures of liquid polymers).

The proposed design of mounting integrated circuits on flat vertical panels, arranged adjacently to each other, results in that the power dissipated in a computing machine, during operation of the machine, is dispersed evenly throughout the whole space, and hence its volumetric density can be substantially lower than in the previously used solutions. In addition, vertical positioning of printed circuit boards results in that the generated heat migrates by natural convection (from bottom to the top). This facilitates the transfer of heat from electronic circuits and thus reduces the cost of cooling systems.

## Claims

1. A panel comprising electronic circuits connected with each other by connectors, wherein the connected electronic circuits (1a-36a; 1b-36b) form a topology comprising two two-dimensional toruses (Sₐ, S_{b}) each comprising M*N circuits, wherein each circuit has a topology index *(i,j),* **characterized in that** the electronic circuits (1a-36a; 1b-36b) are arranged on the panel as a matrix of groups (G_{1,1}; ...; G*_{q,p}*) of circuits, the matrix having the number of rows *q*=N/2 and the number of columns *p*=M/2, wherein each group (G_{1,1}; ...; G*_{q,p}*) comprises 4 circuits having the topology indices (*i,j*; *i,*M-*j*+1; N-*i*+1,M-*j*+1 and N-*i*+1*,j*) of the first torus (Sₐ) and 4 circuits having the topology indices (*i,j*; *i,*M-*j*+1; N-*i*+1,M-*j*+1 and N-*i*+1,*j*) of the second torus (S_{b}).

2. The panel according to claim 1 **characterized in that** it comprises a set of printed-circuit boards connected with wires, wherein each printed-circuit board comprises at least one group (G_{1,1}; ...; G*_{q,p}*) of circuits connected with paths on the printed-circuit board.

3. A set of panels, comprising at least two panels (P1-P3) according to claim 1 or 2, **characterized in that** the panels (P1-P3) are connected serially such that the electronic circuits (1a-36a; 1b-36b) of one panel (P1-P3) are connected to the electronic circuits (1a-36a; 1b-36b) of its neighboring panel (P1-P3) having the same position in the topology of the two-dimensional torus (Sₐ, S_{b}).

4. The set of panels according to claim 3 **characterized in that** the printed-circuit boards of individual panels have their main planes positioned in a single vertical plane, which is the main plane of the panel.

5. The set of panels according to claim 4 **characterized in that** the panels (P1-P3) are positioned serially one behind another.

## Patentansprüche

1. Platte, umfassend elektronische Schaltungen, die miteinander durch Anschlüsse verbunden sind, wobei die verbundenen elektronischen Schaltungen (1a-36a; 1b-36b) eine Topologie bilden, umfassend zwei zweidimensionale Tori (Sₐ, S_{b}), die jeweils M*N Schaltungen umfassen, wobei jede Schaltung einen Topologieindex (*i,j*) aufweist, **dadurch gekennzeichnet, dass** die elektronischen Schaltungen (1a-36a; 1b-36b) auf der Platte als eine Matrix von Gruppen (G_{1,1}; ...; G*_{q,p}*) von Schaltungen angeordnet sind, wobei die Matrix die Anzahl von Zeilen *q*=N/2 und die Anzahl von Spalten *p*=M/2 aufweist, wobei jede Gruppe (G_{1,1}; ...; G*_{q,p}*) 4 Schaltungen, welche die Topologieindizes (*i,j*; *i,*M*-j*+1*;* N-*i*+1,M-*j*+1 und N-*i*+1*,j*) des ersten Torus (Sₐ) aufweisen und 4 Schaltungen umfasst, welche die Topologieindizes (*i,j*; *i,*M-*j*+1; N-*i*+1,M-*j*+1 und N-*i*+1,j) des zweiten Torus (Sb) aufweisen.

2. Platte nach Anspruch 1, **dadurch gekennzeichnet, dass** sie einen Satz von Leiterplatten umfasst, die mit Drähten verbunden sind, wobei jede Leiterplatte mindestens eine Gruppe (G_{1,1}; ...; G*_{q,p}*) von Schaltungen umfasst, die mit Pfaden auf der Leiterplatte verbunden sind.

3. Satz von Platten, umfassend mindestens zwei Platten (P1-P3) nach Anspruch 1 oder 2, **dadurch gekennzeichnet, dass** die Platten (P1-P3) in Reihe verbunden sind, sodass die elektronischen Schaltungen (1a-36a; 1b-36b) einer Platte (P1-P3) mit den elektronischen Schaltungen (1a-36a; 1b-36b) ihrer benachbarten Platte (P1-P3) verbunden sind, welche die gleiche Position in der Topologie des zweidimensionalen Torus (Sₐ, S_{b}) aufweist.

4. Satz von Platten nach Anspruch 3, **dadurch gekennzeichnet, dass** die Leiterplatten einzelner Platten Hauptebenen aufweisen, die in einer einzigen vertikalen Ebene positioniert sind, welche der Hauptebene der Platte entspricht.

5. Satz von Platten nach Anspruch 4, **dadurch gekennzeichnet, dass** die Platten (P1-P3) in Reihe hintereinander positioniert sind.

## Revendications

1. Panneau comprenant des circuits électroniques connectés entre eux par des connecteurs, les circuits électroniques connectés (1a-36a; 1b-36b) formant une topologie comprenant deux tores bidimensionnels (Sₐ, S_{b}) comprenant chacun des circuits M*N, chaque circuit comprenant un indice topologique (*i,j*), **caractérisé en ce que** les circuits électroniques (1a-36a; 1b-36b) sont agencés sur le panneau sous forme d'une matrice de groupes (G_{1,1}; ...; G*_{q,p}*) de circuits, la matrice possédant le nombre de rangées *q*=N/2 et le nombre de colonnes *p*=M/2, chaque groupe (G_{1,1}; ...; G*_{q,p}*) comprenant 4 circuits possédant les indices de topologie (*i,j*; *i,*M-*j*+1; N-*i*+1,M-*j*+1 and N-*i*+1,*j*) du premier tore (Sₐ) et 4 circuits possédant les indices de topologie (*i,j*; *i*,M-*j*+1; N-*i*+1,M-*j*+1 and N*-i*+1,*j*) du deuxième tore (Sb).

2. Panneau selon la revendication 1, **caractérisé en ce qu'**il comprend un ensemble de cartes à circuit imprimé reliées par des câbles, chaque carte à circuit imprimé comprenant au moins un groupe (G_{1,1};....; G*_{q,p}*) de circuits connectés avec des chemins sur la carte à circuit imprimé.

3. Ensemble de panneaux, comprenant au moins deux panneaux (P1-P3) selon la revendication 1 ou 2, **caractérisé en ce que** les panneaux (P1-P3) sont connectés en série de sorte que les circuits électroniques (1a-36a; 1b-36b) d'un panneau (P1-P3) sont connectés aux circuits électroniques (1a-36a; 1b-36b) de son panneau (P1-P3) voisin, occupant la même position dans la topologie des tores bidimensionnels (Sₐ, S_{b}).

4. Ensemble de panneaux selon la revendication 3, **caractérisé en ce que** les plans principaux des cartes à circuit imprimé des panneaux individuels sont positionnés dans un plan vertical unique, qui est le plan principal du panneau.

5. Ensemble de panneaux selon la revendication 4, **caractérisé en ce que** les panneaux (P1-P3) sont positionnés en série l'un derrière l'autre.
